(19) Europäisches Patentamt
European Patent Office
Office européen des brevets

(11) **EP 2 437 626 B1**

(12) **FASCICULE DE BREVET EUROPEEN**

(45) Date de publication et mention
de la délivrance du brevet:
**03.04.2013 Bulletin 2013/14**

(21) Numéro de dépôt: **10734152.1**

(22) Date de dépôt: **03.06.2010**

(51) Int Cl.:
*A41B 11/12* (2006.01)    *C08K 3/36* (2006.01)
*C08L 83/04* (2006.01)    *C08L 83/08* (2006.01)
*C08L 83/10* (2006.01)    *D03D 15/00* (2006.01)
*D06M 10/10* (2006.01)    *D06M 15/643* (2006.01)
*A41C 3/00* (2006.01)    *A41B 11/00* (2006.01)

(86) Numéro de dépôt international:
**PCT/FR2010/000411**

(87) Numéro de publication internationale:
**WO 2010/139868 (09.12.2010 Gazette 2010/49)**

(54) **PROCÉDÉ D'ENDUCTION D'UN SUPPORT TEXTILE**

**VERFAHREN ZUR BESCHICHTUNG EINES TEXTILEN TRÄGERMATERIALS**

**PROCESS FOR COATING OF A TEXTILE SUPPORT**

(84) Etats contractants désignés:
**AL AT BE BG CH CY CZ DE DK EE ES FI FR GB
GR HR HU IE IS IT LI LT LU LV MC MK MT NL NO
PL PT RO SE SI SK SM TR**

(30) Priorité: **05.06.2009 FR 0902739**

(43) Date de publication de la demande:
**11.04.2012 Bulletin 2012/15**

(73) Titulaire: **Bluestar Silicones France
69003 Lyon (FR)**

(72) Inventeurs:
• **DEFAUX, Pierre
69210 Sourcieux Les Mines (FR)**
• **MOULIN, Bernard
F-69530 Brignais (FR)**

(74) Mandataire: **Mekki, Boualem
Bluestar Silicones France
55, avenue des Frères Perret
69191 Saint-Fons (FR)**

(56) Documents cités:
DE-A1-102006 033 393    FR-A1- 2 899 248
FR-A1- 2 904 194    US-A- 5 371 163
US-A1- 2007 106 016

**Description**

La présente invention concerne un procédé d'enduction d'un support textile par une composition silicone élastomère réticulable par polyaddition permettant de conférer au textile une propriété antiglisse. L'invention concerne également des articles textiles ainsi enduits, tels que des vêtements et des dentelles, ayant une bonne adhérence vis-à-vis de supports variés tels que la peau, un autre textile, un support fibreux,...

Le domaine général de l'invention est celui de l'utilisation de compositions silicones, réticulables par des réactions de polyaddition, pour produire un élastomère en couche mince en tant que revêtement de différents textiles.

De tels revêtements en silicone peuvent être obtenus par enduction de supports fibreux puis durcissement découlant de la polyaddition des groupements insaturés (alcényles, e.g. Si-Vi) d'un polyorganosiloxane sur des hydrogènes du même ou d'un autre polyorganosiloxane.

Il est connu d'utiliser des compositions silicones pour l'enduction de matières textiles pour obtenir des propriétés d'adhérence à la peau et d'antiglisse, tel que notamment pour certains vêtements et les articles d'hygiène. Mais l'effet d'adhérence ou effet collant aussi connu comme « tack » ou « effet tackant », n'est pas suffisant pour assurer à lui seul l'effet antiglisse. Il est complété par une compression de la matière textile sur la peau.

Or, pour améliorer le confort de l'utilisateur il est important de diminuer la compression nécessaire pour assurer l'effet antiglisse en augmentant l'effet collant de la matière textile enduite sur la peau. Le niveau d'adhérence (ou tack) doit être optimisé. En effet, un niveau d'adhérence trop élevé se traduit par une forte sensation collante qui n'est pas plaisante et confortable pour l'utilisateur. A contrario un niveau d'adhérence (ou tack) trop faible ne remplit pas la fonction antiglisse et une compression plus importante est nécessaire. Ces contraintes sont rencontrées aujourd'hui particulièrement dans le domaine des bas auto-fixants qui peuvent être à usage médical (bas de contention) ou d'agrément.

Ainsi, pour diminuer la sensation de compression ressentie par l'utilisateur, la demande de brevet FR 2887124 concerne l'utilisation d'une mousse silicone préparée à partir une composition silicone tri-composante. L'un des composants est un agent gonflant ayant un effet de déformabilité pour diminuer la compression de la matière textile sur la peau.

Par ailleurs, les compositions silicones généralement utilisées pour l'enduction de matière textile s'imprègnent fortement dans la matière textile, notamment par enrobage des fils et fibres, et traversent ladite matière apparaissant ainsi sur la surface opposée à celle initialement enduite. Or, ceci pose des problèmes esthétiques d'ordre visuels, et des problèmes lors de la coloration ultérieure de cette matière textile.

On connaît de la demande de brevet FR 2899248 une composition silicone réticulable par réaction de polyaddition contenant un agent thixotropant qui permet de conférer à celle-ci un bon compromis de propriétés au niveau de l'adhérence à la peau de l'utilisateur tout en évitant une imprégnation en profondeur de la surface textile, et notamment un transfert de la composition silicone dans ou de l'autre coté de la surface textile.

Il faut également veiller à ce qu'après enduction et réticulation de la composition silicone sur le textile il ne se produise pas de phénomènes de relargage de substances huileuses qui pourraient tâcher le textile et/ou son emballage.

Cette composition silicone doit être également non toxique et dépourvue d'odeur.

Il est également souhaité que le revêtement puisse résister au lavage et au frottement, et qu'il présente une bonne résistance à l'allongement lorsque la matière textile est manipulée.

Dans ce contexte, l'un des objectifs essentiels de la présente invention est de mettre au point un procédé d'enduction d'un textile avec une composition silicone élastomère réticulable par polyaddition qui après réticulation sur le textile apporte un effet d'adhérence (ou tack) sans augmenter la compression de la matière textile sur la peau.

Un autre objectif essentiel de la présente invention est de fournir une composition silicone non toxique, et en particulier ne contenant pas de catalyseurs à base d'étain, dépourvue d'odeur et ne traversant pas la surface textile lors de l'enduction de celle-ci.

Un autre objectif essentiel de cette invention est de fournir un textile enduit par une composition silicone réticulée par polyaddition présentant un certain niveau d'adhérence (ou tack), avec une faible compression sur la peau et qui ne relargue pas de substances huileuses pouvant tâcher la matière textile ou son emballage.

Tous ces objectifs, parmi d'autres, sont atteints par la présente invention qui concerne un procédé d'enduction d'une composition silicone **(A)** précurseur d'un élastomère et réticulable par polyaddition sur un support textile comprenant les étapes a), b) et c) suivantes :

a) On prépare une composition silicone **(A)** précurseur d'un élastomère et réticulable par polyaddition comprenant:

- au moins un polyorganosiloxane **(B)** linéaire ou ramifié, porteur de groupements alcényles et comprenant:

1) des motifs siloxyles terminaux de type M = $(X)_s(R)_tSiO_{1/2}$ dans lesquels les radicaux R, identiques ou différents, correspondent à un groupement alkyle linéaire ou ramifié en $C_1$-$C_6$, éventuellement substitué ou un groupement aryle substitué ou non, et les radicaux X correspondent à des groupements alcényles ayant de 2 à 6 atomes de carbone, de préférence des groupements vinyles, avec s = 0 ou 1, t= 2 ou 3 et s+ t = 3 ; et

2) des motifs siloxyles, identiques ou différents, de type D= $(X)_u(R^1)_y SiO_{2/2}$ dans lesquels les radicaux $R^1$ répondent à la même définition que R, les radicaux X correspondent à des groupements alcényles ayant de 2 à 6 atomes de carbone, de préférence des groupements vinyles, avec u= 0 ou 1, v =1 ou 2 et u+ v = 2, avec la condition selon laquelle le polyorganosiloxane **(B)** comprend au moins deux radicaux X par molécule;

- au moins un polyorganosiloxane **(C)** linéaire ou ramifié porteur d'un groupement alcényle par molécule et comprenant:

    1) des motifs siloxyles terminaux, identiques ou différents, de type M=$(X)_w(R^2)_x SiO_{1/2}$ dans lequel les radicaux X correspondent à des groupements alcényles ayant de 2 à 6 atomes de carbone, de préférence des groupements vinyles, et les radicaux $R^2$ répondent à la même définition que R, avec w=0 ou 1, x=2 ou 3 et w+x= 3; et

    2) des motifs siloxyles D = $(X)_y(R^3)_z SiO_{2/2}$ dans lequel les radicaux X correspondent à des groupements alcényles ayant de 2 à 6 atomes de carbone, de préférence des groupements vinyles, et les radicaux $R^3$ répondent à la même définition que R, avec y=0 ou 1, z=1 ou 2 et y+ z=2 , avec la condition selon laquelle le polyorganosiloxane **(C)** comprend un seul radical X par molécule;

- au moins deux hydrogénopolyorganosiloxanes **(D)**, l'un ayant un rôle d'allongeur **(D-1)** et l'autre ayant un rôle de réticulant **(D-2):**

    - ledit hydrogénopolyorganosiloxane allongeur **(D-1)** comprenant:

        1) des motifs siloxyles terminaux de type M = $(R^4)_2(H)SiO_{1/2}$ dans lesquels les radicaux $R^4$ répondent à la même définition que R, et

        2) des motifs siloxyles, identiques ou différents, de type D = $(R^5)_2 SiO_{2/2}$ dans lesquels les radicaux $R^5$ répondent à la même définition que R; avec la condition selon laquelle l'hydrogénopolyorganosiloxane allongeur **(D-1)** comprend deux fonctions SiH par molécule ;

    - ledit hydrogénopolyorganosiloxane réticulant **(D-2)** comprenant:

        1) des motifs siloxyles terminaux de type M = $(R^6)_2(H)SiO_{1/2}$ dans lesquels les radicaux $R^6$ répondent à la même définition que R, et

        2) des motifs siloxyles, identiques ou différents, de type D=$(R^7)_p(H)_q SiO_{2/2}$ dans lesquels les radicaux $R^7$ répondent à la même définition que R, avec p=1 ou 2, q=0 ou 1 et p + q=2 ; avec la condition selon laquelle l'hydrogénopolyorganosiloxane réticulant **(D-2)** comprend au moins trois fonctions SiH par molécule;

- au moins une charge minérale **(E),**
- une quantité efficace d'au moins un catalyseur d'hydrosilylation **(F),**
- au moins un inhibiteur de réticulation **(G),**
- éventuellement au moins un polyorganosiloxane non réactif **(H)** comprenant :

    1) des motifs siloxyles terminaux de type M = $(R^8)_3 SiO_{1/2}$ dans lesquels les radicaux $R^8$ répondent à la même définition que R, et

    2) des motifs siloxyles, identiques ou différents, de type D = $(R^9)_2 SiO_{2/2}$ dans lesquels les radicaux $R^9$ répondent à la même définition que R, et

- éventuellement un additif de formulation **(I),**

avec la condition supplémentaire que la quantité des polyorganosiloxanes **(B), (C)** et **(D)** est choisie de manière à ce que le rapport molaire r2 des atomes d'hydrogène liés au silicium des hydrogénopolyorganosiloxanes réticulants **(D-2)** aux radicaux alcényles liés au silicium des polyorganosiloxanes **(B)** et **(C)** est défini comme suit :

$$0,10 \leq r_2 \leq 0,40 ,$$

préférentiellement 0,15 ≤ r$_2$ ≤ 0,35, et
encore plus préférentiellement 0,20 ≤ r$_2$ ≤ 0,30 ;
b) puis on dépose de manière continue ou discontinue ladite composition silicone **(A)** sur ledit support textile, et
c) on procède à la réticulation de ladite composition silicone **(A)** par chauffage et/ou par rayonnement infra-rouge.

Pour atteindre ces objectifs, les inventeurs ont eu le mérite de mettre en évidence, de manière tout à fait surprenante et inattendue que les caractéristiques suivantes de la composition silicone **(A)** selon l'invention:

1) la présence d'au moins un polyorganosiloxane **(C)** ayant un seul motif alcényle par molécule (polyorganosiloxane monoalcénylé), et
2) le maintien d'un ratio r$_2$ dans un intervalle spécifique, en l'occurrence 0,10 ≤ r$_2$ ≤ 0,40, le ratio r$_2$ étant le rapport molaire des atomes d'hydrogène liés au silicium des hydrogénopolyorganosiloxanes réticulants **(D-2)** aux radicaux alcényles liés au silicium des polyorganosiloxanes **(B);**

permettent d'obtenir selon le procédé de l'invention un textile enduit ayant un bon niveau d'adhérence sur la peau .
L'étape de réticulation est réalisée de préférence par air chaud ou rayonnement électro-magnétique, par exemple infra-rouge, notamment de 10 secondes à 10 minutes, à une température de réticulation sans dépasser la température de dégradation de la surface textile. Le séchage est généralement effectué de manière à obtenir un toucher sec de la composition silicone réticulée.
Selon un mode de réalisation préféré, les polyorganosiloxanes **(B), (C)** et **(D)** sont ajoutés dans la composition silicone **(A)** de manière à ce que le rapport molaire r des atomes d'hydrogène liés au silicium des hydrogénopolyorganosiloxanes **(D-1)** et **(D-2)** aux radicaux alcényles liés au silicium des polyorganosiloxanes **(B)** et **(C)** soit supérieur à 1 et de préférence compris entre 1 et 1,35, et encore plus préférentiellement compris entre 1 et 1,25.
De préférence, la composition silicone **(A)** présente une viscosité dynamique supérieure à 100000 mPa.s. Toutes les viscosités dont il est question dans le présent mémoire correspondent à une grandeur de viscosité dynamique qui est mesurée, de manière connue en soi, à 25°C, avec un appareil de type Brookfield, selon la norme AFNOR NFT 76 102 de février 1972. S'agissant de produits très fluides, la viscosité dont il est question dans le présent exposé est la viscosité dynamique à 25°C, dite "Newtonienne", c'est-à-dire la viscosité dynamique qui est mesurée, de manière connue en soi, à un gradient de vitesse de cisaillement suffisamment faible pour que la viscosité mesurée soit indépendante du gradient de vitesse.
Selon une disposition préférée de réalisation de l'invention, la composition silicone **(A)** est obtenue par mélange d'au moins deux parties P1 et P2 comprenant les constituants **(B)** à **(G)** et éventuellement **(H)** et **(I),** avec comme condition que le catalyseur de la réaction d'hydrosilylation **(F)** soit séparé du constituant **(D).** La viscosité des parties 1 et 2 et de leur mélange peut être ajustée en jouant sur les quantités des constituants et en choisissant les polyorganosiloxanes de viscosité différente.
Selon un mode de mise en oeuvre particulièrement préféré, la composition silicone **(A)** utilisée selon l'invention fait intervenir les constituants **(B)** à **(I)** dans les proportions suivantes, en pourcentage en poids par rapport à la masse totale de la composition silicone **(A) :**

| **(B)** | de 40 à 90 |
|---|---|
| **(C)** | de 4 à 20 |
| **(D-1)** | de 1 à 2 |
| **(D-2)** | de 0,1 à 0,6 |
| **(E)** | de 5 à 20 |
| **(F)** | de 0,005 à 0,25 |
| **(G)** | de 0,010 à 0,020 |
| **(H)** | de 0 à 10 |
| **(I)** | de 0 à 5. |

Selon un mode de mise en oeuvre encore plus particulièrement préféré, la composition silicone **(A)** utilisée selon l'invention fait intervenir les constituants **(B)** à **(1)** dans les proportions suivantes, en pourcentage en poids par rapport à la masse totale de la composition silicone **(A) :**

| **(B)** | de 50 à 85 |
|---|---|
| **(C)** | de 8 à 18 |
| **(D-1)** | de 1,2 à 1,8 |

(suite)

| | |
|---|---|
| **(D-2)** | de 0,2 à 0,5 |
| **(E)** | de 8 à 18 |
| **(F)** | de 0,005 à 0,25 |
| **(G)** | de 0,010 à 0,020 |
| **(H)** | de 0 à 5 |
| **(I)** | de 0 à 3. |

Et, selon un mode de mise en oeuvre encore plus particulièrement préféré, la composition silicone **(A)** utilisée selon l'invention fait intervenir les constituants **(B)** à **(I)** dans les proportions suivantes, en pourcentage en poids par rapport à la masse totale de la composition silicone **(A)** :

| | |
|---|---|
| **(B)** | de 60 à 80 |
| **(C)** | de 10 à 17 |
| **(D-1)** | de 1,2 à 1,8 |
| **(D-2)** | de 0,2 à 0,5 |
| **(E)** | de 10 à 17 |
| **(F)** | de 0,005 à 0,25 |
| **(G)** | de 0,010 à 0,020 |
| **(H)** | de 0 à 2 |
| **(1)** | de 0 à 1. |

Selon un mode de réalisation préféré de l'invention, à l'étape b) on dépose ladite composition silicone **(A)** sur le support textile par transfert, par rouleau lécheur ou par pulvérisation à l'aide d'une buse, d'une racle, d'un cadre rotatif ou d'un rouleau inverse « reverse roll ». L'épaisseur de la couche de la composition (A) déposée sur le textile est comprise entre 0,1 et 0,5 mm, de préférence entre 0,1 et 0,4 mm et plus préférentiellement encore entre 0,1 et 0,3 mm.

On entend par textile au sens de l'invention, un terme générique englobant toutes les structures textiles. Les textiles peuvent être constitués par des fils, fibres, filaments et/ou autres matières. Ils comprennent notamment les étoffes souples, qu'elles soient tissées, collées, tricotées, tressées, en feutre, aiguilletées, cousues, ou réalisées par un autre mode de fabrication.

Ces textiles peuvent être ajourés, c'est à dire comprendre des espaces libres non constitués de textile. Pour que l'enduction de la composition silicone de l'invention soit efficace, il est préférable que la plus petite des dimensions de ces espaces libres soient inférieure à 5 mm, notamment inférieurs à 1 mm.

Par fil, on entend par exemple un objet multifilamentaire continu, un fil continu obtenu par assemblage de plusieurs fils ou un filé de fibres continu, obtenu à partir d'un unique type de fibres, ou d'un mélange de fibres. Par fibre, on entend par exemple une fibre courte ou longue, une fibre destinée à être travaillée en filature ou pour la fabrication d'articles non tissés ou un câble destiné à être coupés pour former des fibres courtes. Le textile peut parfaitement être constitué de fils, fibres et/ou filaments ayant subi une ou plusieurs étapes de traitements avant la réalisation de la surface textile, tels que par exemple des étapes de texturation, d'étirage, d'étirage-texturation, d'ensimage, de relaxation, de thermofixation, de torsion, de fixation, de frisage, de lavage et/ou de teinture.

Selon l'invention, tout type de support textile peut être utilisé. A titre indicatif, on peut citer :

- les textiles naturels, tels que : les textiles d'origine végétale, comme le coton, le lin, le chanvre, la jute, la coco, les fibres cellulosique du papier ; et les textiles d'origine animale, comme la laine, les poils, le cuir et les soies ;
- les textiles artificiels, tels que : les textiles cellulosiques, comme la cellulose ou ses dérivés ; et les textiles protéiniques d'origine animale ou végétale ; et
- les textiles synthétiques, tels que le polyester, le polyamide, les alcools polymalliques, le chlorure de polyvinyle, le polyacrylonitrile, les polyoléfines, l'acrylonitrile, les copolymères (méth)acrylate-butadiène-styrène et le polyuréthane.

Les textiles synthétiques obtenus par polymérisation ou polycondensation peuvent notamment comprendre dans leur matrice différents types d'additifs, tels que des pigments, des délustrants, des matifiants, des catalyseurs, des stabilisants thermiques et/ou lumière, des agents anti-statiques, des ignifugeants, des agents anti-bactériens, anti-fongiques, et/ou anti-acariens.

Comme type de surfaces textiles, on peut citer notamment les surfaces obtenues par entrecroisement rectiligne des fils ou tissus, les surfaces obtenues par entrelacement curviligne des fils ou tricots, les surfaces mixtilignes ou tulles, les surfaces non tissées et les surfaces composites. Parmi la multitude de surfaces textiles possibles utilisables dans le procédé de l'invention, on peut mentionner les feutres, les denims, les tissés jacquards, les aiguilletés, les cousus, les crochetés, les grenadines, les dentelles et dentelés, les damas, les voiles, les alpagas, les barathéas, les basins, les bouclés, les brocarts, les calicots, les velours, les canevas, les chiffons, les flockés, les encollés, les étamines, les tressés, les failles, les foulards, les gazes, les géotextiles, les jaspés, les matelassés, les touffetés, les organzas, les plissés, les rubans, et les toiles.

Le support textile utilisé dans le procédé de la présente invention peut être constitué d'un ou plusieurs textiles, identiques ou différents, assemblés par diverses manières. Le textile peut être mono- ou multi-couche(s). Le support textile peut par exemple être constitué d'une structure multicouche pouvant être réalisé par différents moyens d'assemblage, tels que des moyens mécaniques comme la couture, le soudage, ou le collage par point ou continu.

Le support textile peut, outre le procédé d'enduction selon la présente invention, subir un ou plusieurs autres traitements subséquents, également appelés traitement de finition ou d'ennoblissement. Ces autres traitements peuvent être effectués avant, après et/ou pendant ledit procédé d'enduction de l'invention. Comme autres traitements subséquents, on peut notamment citer : la teinture, l'impression, le contrecollage, l'enduction, l'assemblage avec d'autres matériaux ou surfaces textiles, le lavage, le dégraissage, le préformage ou le fixage.

Selon une disposition préférée de réalisation de l'invention, le support textile est une dentelle ou une bande élastique.

La présente invention a aussi pour objet une composition silicone (A) précurseur d'un élastomère et réticulable par polyaddition comprenant:

- au moins un polyorganosiloxane (B) linéaire ou ramifié, porteur de groupements alcényles et comprenant:

    1) des motifs siloxyles terminaux de type $M = (X)_s(R)_t SiO_{1/2}$ dans lesquels les radicaux R, identiques ou différents, correspondent à un groupement alkyle linéaire ou ramifié en $C_1$-$C_6$, éventuellement substitué ou un groupement aryle substitué ou non, et les radicaux X correspondent à des groupements alcényles ayant de 2 à 6 atomes de carbone, de préférence des groupements vinyles, avec s = 0 ou 1, t= 2 ou 3 et s+ t = 3 ; et
    2) des motifs siloxyles, identiques ou différents, de type $D= (X)_u(R^1)_v SiO_{2/2}$ dans lesquels les radicaux $R^1$ répondent à la même définition que R, les radicaux X correspondent à des groupements alcényles ayant de 2 à 6 atomes de carbone, de préférence des groupements vinyles, avec u= 0 ou 1, v =1 ou 2 et u+v=2,
    avec la condition selon laquelle le polyorganosiloxane (B) comprend au moins deux radicaux X par molécule;

- au moins un polyorganosiloxane (C) linéaire ou ramifié porteur d'un groupement alcényle par molécule et comprenant:

    1) des motifs siloxyles terminaux, identiques ou différents, de type $M=(X)_w(R_2)_x SiO_{1/2}$ dans lequel les radicaux X correspondent à des groupements alcényles ayant de 2 à 6 atomes de carbone, de préférence des groupements vinyles, et les radicaux $R^2$ répondent à la même définition que R, avec w=0 ou 1, x=2 ou 3 et w+ x =3 ; et
    2) des motifs siloxyles $D = (X)_y(R^3)_z SiO_{2/2}$ dans lequel les radicaux X correspondent à des groupements alcényles ayant de 2 à 6 atomes de carbone, de préférence des groupements vinyles, et les radicaux $R^3$ répondent à la même définition que R, avec y=0 ou 1, z=1 ou 2 et y+ z=2 ,
    avec la condition selon laquelle le polyorganosiloxane (C) comprend un seul radical X par molécule;

- au moins deux hydrogénopolyorganosiloxanes (D), l'un ayant un rôle d'allongeur (D-1) et l'autre ayant un rôle de réticulant (D-2):

    - ledit hydrogénopolyorganosiloxane allongeur (D-1) comprenant:

        1) des motifs siloxyles terminaux de type $M = (R^4)_2(H)SiO_{1/2}$ dans lesquels les radicaux $R^4$ répondent à la même définition que R, et
        2) des motifs siloxyles, identiques ou différents, de type $D = (R^5)_2 SiO_{2/2}$ dans lesquels les radicaux $R^5$ répondent à la même définition que R;
        avec la condition selon laquelle l'hydrogénopolyorganosiloxane allongeur (D-1) comprend deux fonctions SiH par molécule ;

    - ledit hydrogénopolyorganosiloxane réticulant (D-2) comprenant:

        1) des motifs siloxyles terminaux de type $M = (R^6)_2(H)SiO_{1/2}$ dans lesquels les radicaux $R^6$ répondent à la

même définition que R, et

2) des motifs siloxyles, identiques ou différents, de type D=$(R^7)_p(H)_q SiO_{2/2}$ dans lesquels les radicaux $R^7$ répondent à la même définition que R, avec p=1 ou 2, q=0 ou 1 et p + q=2 ;

avec la condition selon laquelle l'hydrogénopolyorganosiloxane réticulant **(D-2)** comprend au moins trois fonctions SiH par molécule;

- au moins une charge minérale **(E)**,
- une quantité efficace d'au moins un catalyseur d'hydrosilylation **(F)**,
- au moins un inhibiteur de réticulation **(G)**,
- éventuellement au moins un polyorganosiloxane non réactif **(H)** comprenant :

1) des motifs siloxyles terminaux de type M = $(R^8)_3 SiO_{1/2}$ dans lesquels les radicaux $R^8$ répondent à la même définition que R, et

2) des motifs siloxyles, identiques ou différents, de type D = $(R^9)_2 SiO_{2/2}$ dans lesquels les radicaux $R^9$ répondent à la même définition que R, et

- éventuellement un additif de formulation **(I)**,

avec la condition supplémentaire que la quantité des polyorganosiloxanes **(B)**, **(C)** et **(D)** est choisie de manière à ce que le rapport molaire $r_2$ des atomes d'hydrogène liés au silicium des hydrogénopolyorganosiloxanes réticulant **(D-2)** aux radicaux alcényles liés au silicium des polyorganosiloxanes **(B)** et **(C)** est définit comme suit :

$$0{,}10 \leq r_2 \leq 0{,}40 \, ,$$

préférentiellement $0{,}15 \leq r_2 \leq 0{,}35$, et
encore plus préférentiellement $0{,}20 \leq r_2 \leq 0{,}30$.

Avantageusement, dans la composition silicone **(A)** décrite ci-dessus, les polyorganosiloxanes **(B)**, **(C)** et **(D)** sont ajoutés de manière à ce que le rapport molaire r des atomes d'hydrogène liés au silicium des hydrogénopolyorganosiloxanes **(D-1)** et **(D-2)** aux radicaux alcényles liés au silicium des polyorganosiloxanes **(B)** et **(C)** soit supérieur à 1 et de préférence compris entre 1 et 1,30, et encore plus préférentiellement compris entre 1 et 1,25.

Aussi bien pour la composition silicone **(A)** que pour le procédé décrit ci-dessus, les polyorganosiloxanes (POS) **(B)**, **(C)**, **(D)** et éventuellement **(H)** constituants principaux des compositions selon l'invention, peuvent être linéaires, ramifiés ou réticulés, et notamment comporter des radicaux hydrocarbonés et des groupements réactifs comme par exemple des groupements alcénylsilylés et/ou des groupements hydrogénosilylés. Les compositions organopolysiloxanes sont amplement décrites dans la littérature et notamment dans l'ouvrage de Walter NOLL "Chemistry and Technology of Silicones", Academic Press, 1968, 2ème édition, pages 386 à 409.

Les polyorganosiloxanes **(B)** selon l'invention présentent par molécule au moins deux groupements fonctionnels insaturés X de type alcényle en $C_2$-$C_6$, liés au silicium. Par alcényle, on entend une chaîne hydrocarbonée insaturée, linéaire ou ramifiée, substituée ou non, présentant au moins une double liaison oléfinique, et plus préférablement une seule double liaison. De préférence, le groupe "alcényle" présente de 2 à 8 atomes de carbone, mieux encore de 2 à 6. Cette chaîne hydrocarbonée comprend éventuellement au moins un hétéroatome tel que O, N, S. Des exemples préférés de groupes alcényles sont les groupes vinyle, allyle et homoallyle; le vinyle étant particulièrement préféré.

Ces polyorganosiloxanes **(B)** peuvent également comporter des radicaux R et $R^1$, identiques ou différents, qui correspondent à un groupement alkyle linéaire ou ramifié en $C_1$-$C_6$, éventuellement substitué ou un groupement aryle substitué ou non.

Par alkyl, on désigne une chaîne hydrocarbonée saturée, cyclique, linéaire ou ramifiée, éventuellement substituée (e.g. par un ou plusieurs alkyles), de préférence de 1 à 10 atomes de carbone, par exemple de 1 à 8 atomes de carbone, mieux encore de 1 à 4 atomes de carbone. Des exemples de groupes alkyles sont notamment méthyle, éthyle, isopropyle, n-propyle, tert-butyle, isobutyle, n-butyle, n-pentyle, isoamyle et 1,1-diméthylpropyle. La partie "alkyl" du radical "alcoxy" est telle que définie ci-dessus. L'alkyl peut être perfluoré, et par alkyl perfluoré, on désigne un alkyle comprenant au moins un groupe perfluoroalkyle, ayant de préférence pour formule :

-$(CH_2)_p$-$C_q F_{2q+1}$

dans laquelle p représente 0, 1, 2, 3 ou 4 ; q est un entier de 1 à 10 ; et $C_q F_{2q+1}$ est linéaire ou ramifié. Des exemples préférés de ce radical sont :

$-(CH_2)_2-(CF_2)_5-CF_3$ et $-(CF_2)_7-CF_3$.

L'expression aryl désigne un groupe hydrocarboné aromatique, ayant de 6 à 18 atomes de carbone, monocyclique ou polycyclique et de préférence monocyclique ou bicyclique. Il doit être entendu que, dans le cadre de l'invention, par radical aromatique polycyclique, on entend un radical présentant deux ou plusieurs noyaux aromatiques, condensés (orthocondensés ou ortho et péricondensés) les uns aux autres, c'est-à-dire présentant, deux à deux, au moins deux carbones en commun. A titre d'exemple "d'aryle", on peut mentionner e.g les radicaux phényle.

Des exemples de polyorganosiloxanes **(B)** sont des composés linéaires et cycliques comme : les diméthylpolysiloxanes à extrémités diméthylvinylsilyles, les copolymères (méthylvinyl)(diméthyl)polysiloxanes à extrémités triméthylsilyles, les copolymères (méthylvinyl)(diméthyl)polysiloxanes à extrémités diméthylvinylsilyles et les méthylvinylpolysiloxanes cycliques. Les polyorganosiloxanes **(B)** les plus volontiers mis en oeuvre sont des polydiméthylsiloxanes $\alpha$,$\omega$(diméthyvinylsiloxy) ou des polyorganosiloxanes de type poly(diméthylsiloxy) (méthylvinylsiloxy) $\alpha$,$\omega$ (diméthylvinylsiloxy).

Les polyorganosiloxanes **(C)** selon l'invention présentent par molécule un seul groupement fonctionnel insaturé X de type alcényle en $C_2$-$C_6$, lié au silicium. Par alcényle, on entend une chaîne hydrocarbonée insaturée, linéaire ou ramifiée, substituée ou non, présentant au moins une double liaison oléfinique, et plus préférablement une seule double liaison. De préférence, le groupe "alcényle" présente de 2 à 8 atomes de carbone, mieux encore de 2 à 6. Cette chaîne hydrocarbonée comprend éventuellement au moins un hétéroatome tel que O, N, S. Des exemples préférés de groupes alcényles sont les groupes vinyle, allyle et homoallyle; le vinyle étant particulièrement préféré. Ces polyorganosiloxanes **(C)** peuvent également comporter des radicaux $R^2$ et $R^3$, identiques ou différents, qui répondent à la même définition que les radicaux R et R' définis ci-dessus.

Les polyorganosiloxanes **(C)** préférés selon l'invention sont les polyorganosiloxanes monofonctionnels comme les (diméthylvinylsiloxy)-polydiméthylsiloxanes ou les polyorganosiloxanes de type poly(diméthylsiloxy)- (méthylvinylsiloxy)-$\alpha$,$\omega$ (triméthylsiloxy).

Dans les compositions selon l'invention son également présents deux types d'hydrogénopolyorganosiloxanes **(D)**, l'un ayant un rôle d'allongeur **(D-1)** et l'autre ayant un rôle de réticulant **(D-2).** Les hydrogénopolyorganosiloxanes **(D-1)** allongeurs présentent deux liaisons SiH par molécule sur des motifs siloxyles terminaux comme par exemple les diméthylpolysiloxanes à extrémités hydrogénodiméthylsilyle. Les hydrogénopolyorganosiloxanes **(D-2)** réticulants présentent au moins trois liaisons SiH par molécule sur des motifs siloxyle pendants et terminaux. A titre d'illustration nous pouvons citer : les copolymères à motifs (diméthyl) (hydrogénométhyl) polysiloxanes à extrémités triméthylsilyles, les copolymères à motifs (diméthyl) (hydrogénométhyl) polysiloxanes à extrémités hydrogénodiméthylsilyles, les hydrogénométhylpolysiloxanes à extrémités triméthylsilyles et les hydrogénométhylpolysiloxanes cycliques. De préférence, les hydrogénopolyorganosiloxanes **(D-2)** réticulants sont des huile poly(diméthyl)(hydrogénométhyl)polysiloxanes à extrémités hydrogénodiméthylsilyles.

Ces hydrogénopolyorganosiloxanes **(D)** peuvent également comporter des radicaux $R^4$, $R^5$, $R^6$ et $R^5$ identiques ou différents, qui répondent à la même définition que les radicaux R et $R^1$ définis ci-dessus.

Les compositions silicones selon l'invention peuvent comprendre en outre, au moins un polyorganosiloxane non réactif **(H)**, notamment sous forme d'huile ou de résine, généralement pour régler la viscosité de la composition ou pour faire office de diluant. Ce polyorganosiloxane **(H)** ne comprend pas de groupements réactifs de type alcénylsilylés et/ou hydrogénosilylés. Ces polyorganosiloxanes non réactifs **(H)** peuvent également comporter des radicaux $R^8$ et $R^9$ identiques ou différents, qui répondent à la même définition que les radicaux R et $R^1$ définis ci-dessus.

De façon avantageuse, le polyorganosiloxane non réactif **(H)** est une huile diméthylpolysiloxane à extrémités triméthylsilyles.

Comme autres exemples de groupes hydrocarbonés R, $R^1$, $R^2$, $R^3$, $R^4$, $R^5$, $R^6$, $R^7$, $R^8$ et $R^9$ monovalents susceptibles d'être présents dans les polyorganosiloxanes **(B), (C), (D)** et éventuellement **(H)** susvisés, on peut citer: le méthyle, l'éthyle ; le n-propyle ; l'i-propyle ;le n-butyle ; i-butyle ; t-butyle ; chlorométhyle ; dichlorométhyle ; $\alpha$-chloroéthyle ; $\alpha$, $\beta$-dichloroéthyle ; fluorométhyle ; difluorométhyle ; $\alpha$, $\beta$-difluoroéthyle ; trifluoro-3,3,3-propyle ; trifluoro cyclopropyle ; trifluoro-4,4,4 butyle ; hexafluoro-3,3,5,5,5,5 pentyle ; $\beta$-cyanoéthyle ; $\gamma$-cyanopropyle ; phényle ; p-chlorophényle ; m-chlorophényle ; dichloro-3,5-phényle ; trichlorophényle ; tétrachlorophényle ; o-, p- ou m-tolyle ; $\alpha$, $\alpha$, $\alpha$-trifluorotolyle ; xylyles comme diméthyle-2,3 phényle ; diméthyle-3,4-phényle. Préférentiellement, les radicaux R, $R^1$, $R^2$, $R^3$, $R^4$, $R^5$, $R^6$ et $R^7$ liés aux atomes de silicium sont des radicaux méthyle, phényle, ces radicaux pouvant être éventuellement halogénés ou bien encore des radicaux cyanoalkyle. Les halogènes sont par exemple le fluor, le chlore, le brome et l'iode, de préférence le chlore ou le fluor.

Concernant les charges minérales **(E),** on préfère les charges de renfort ou de bourrage. Les charges renforçantes sont préférentiellement des silices de combustion ou des silices de précipitation. Les charges minérales de type silice ont préférentiellement une surface spécifique, mesurée selon les méthodes BET, d'au moins 50 m²/g, notamment comprise entre 50 et 400 m²/g, de préférence supérieure à 70 m²/g, une dimension moyenne des particules primaires inférieure à 0,1 micromètre (μm) et une densité apparente inférieure à 200 g/litre.

Les charges minérales de type silice, de préférence hydrophiles, peuvent être incorporées telles quelles dans la composition silicone ou être éventuellement traité par un agent de compatibilisation. Selon une variante, ces silices peuvent éventuellement être traitées par un ou des composés organosiliciques, par exemple organosilane ou organosilazane, habituellement utilisés pour cet usage. Parmi ces composés, figurent les méthylpolysiloxanes tels que l'hexaméthyldisiloxane, l'octaméthylcyclo-tétrasiloxane, les méthylpolysilazanes tels que l'hexaméthyldisilazane, l'hexaméthylcyclotrisilazane, le tétraméthyldivinyldisilazane, les chlorosilanes tels que le diméthyl-dichlorosilane, le triméthylchloro-rosilane, le méthylvinyldichlorosilane, le diméthylvinylchlorosilane, les alcoxysilanes tels que le diméthyl-diméthoxysilane, le diméthylvinyléthoxysilane, le triméthylméthoxysilane. Ces composés peuvent être utilisés seuls ou en mélange.

La silice peut éventuellement être prédispersée dans une huile silicone, de façon à obtenir une suspension. On préfère notamment utiliser une suspension de silice de combustion traitée, notamment par de l'hexaméthyldisilazane, dans une huile polyorganosiloxane, notamment vinylée.

A la silice préférée comme charge minérale **(E)**, on peut en outre ajouter dans la composition d'autres types de charges notamment de bourrage, telles que par exemple le quartz broyé, les terres de diatomées, le carbonate de calcium et/ou le kaolin.

Pour le composant **(F)**, on entend par quantité efficace d'au moins un catalyseur de réaction d'hydrosilylation, la quantité suffisante pour amorcer la réaction d'hydrosilylation. Concernant la quantité catalytiquement efficace à mettre en oeuvre, il va de soi que l'homme du métier du domaine considéré est parfaitement à même de déterminer la quantité optimale de catalyseur pour promouvoir la réaction d'hydrosilylation. Cette quantité dépend notamment de la nature du catalyseur et des polyorganosiloxanes en cause. Pour fixer les idées on peut indiquer qu'elle sera comprise entre 0,001 et 0,5 % en poids par rapport au poids total de la composition **(A)**.

Comme catalyseur de réticulation **(F)**, on peut notamment choisir un catalyseur consistant en au moins un métal ou composé du groupe du platine. Les métaux du groupe du platine sont ceux connus sous le nom de platinoïdes, appellation qui regroupe, outre le platine, le ruthénium, le rhodium, le palladium, l'osmium et l'iridium. On utilise, de préférence, les composés du platine et du rhodium. A titre d'exemples, on peut citer le platine noir, l'acide chloroplatinique, un acide chloroplatinique modifié par un alcool, un complexe de l'acide chloroplatinique avec une oléfine, un aldéhyde, un vinylsiloxane ou un alcool acétylénique, entre autres. Le brevet US N° 2 823 218 divulgue un catalyseur d'hydrosilylation du type acide chloroplatinique et le brevet US N°3 419 593 est relatif à des catalyseurs formés par des complexes d'acide chloroplatinique et d'organosilicone du type vinylsiloxane. Des complexes de platine et d'hydrocarbures utiles comme catalyseur d'hydrosilylation sont divulgués par les brevets US N° 3 159 601 et 3 159 662. Le brevet US N ° 3 723 497 décrit un acétylacétonate de platine et le brevet US N° 3 220 972 a pour objet des catalyseurs à base d'alcoolate de platine.

Comme inhibiteur de réticulation **(G)**, on peut utiliser ceux classiquement mis en oeuvre dans les réactions de réticulation de POS. Ils peuvent être notamment choisis parmi les composés suivants.

- les polyorganosiloxanes substitués par au moins un alcényle pouvant se présenter éventuellement sous forme cyclique, le tétraméthylvinyltétrasiloxane étant particulièrement préféré,
- la pyridine,
- les phosphines et les phosphites organiques,
- les amides insaturés,
- les maléates alkylés, et
- les alcools acétyléniques.

Comme alcools acétyléniques, (cf. FR1528464 et FR2372874), qui font partie des bloqueurs thermiques de réaction d'hydrosilylation préférés, ont peut notamment choisir l'éthynyl-1-cyclohexanol-1, le méthyl-3 dodécyne-1 ol-3, le triméthyl-3,7,11 dodécyne-1 ol-3, le diphényl-1,1 propyne-2 ol-1, l'éthyl-3 éthyl-6 nonyne-1 ol-3, le méthyl-2 butyne-3 ol-2, le méthyl-3 pentadécyne-1 ol-3.

En outre, la composition silicone **(A)** selon l'invention peut comporter également d'autres additifs classiques de formulation **(I)**, tels que des colorants, des pigments, des agents pour la résistance au feu, des bactéricides, et des pigments minéraux ou organiques.

La présente invention concerne également un textile enduit susceptible d'être obtenu par le procédé tel que défini précédemment.

Les textiles ainsi obtenus, tels quels ou transformés en articles textiles, peuvent être utilisés dans de nombreuses applications, telles que, par exemple, dans le domaine de l'habillement, notamment la lingerie comme les dentelles de hauts de bas ou de soutien-gorge, et les articles d'hygiène, tels que des bandes de contention ou des pansements. Ces articles textiles peuvent être repositionnés à différents endroits du corps ou d'un vêtement par exemple grâce à l'adhérence apportée par l'élastomère silicone.

La présente invention vise également l'utilisation de la composition silicone **(A)** telle que définie selon ci-dessus pour enduire un textile et plus particulièrement une dentelle ou une bande élastique.

D'autres détails ou avantages de l'invention apparaîtront plus clairement au vu des exemples donnés ci-dessous uniquement à titre indicatif.

## EXEMPLES

## <u>Compositions</u>

Les différents composés qui ont été utilisés pour préparer les compositions silicones sont détaillés dans le tableau 1 ci-dessous.

Nota : Pour l'ensemble des exemples, huile PDMS = huile polydiméthylsiloxane.

Tableau 1

| | | |
|---|---|---|
| **Composé B** | Huile PDMS $\alpha,\omega$ vinylée de viscosité 100000 mPa.s | **Huile VI-1** |
| | Huile PDMS $\alpha,\omega$ vinylée de viscosité 600 mPa.s | **Huile VI-2** |
| | Huile PDMS $\alpha,\omega$ vinylée de viscosité 60000 mPa.s | **Huile VI-3** |
| **Composé C** | Huile PDMS avec un motif vinylé par molécule de viscosité 1000 mPA.s | **Huile MonoVI** |
| **Composé D-1** | Huile PDMS $\alpha,\omega$ hydrogénée avec un taux de SiH = 0,2% en poids | **Huile H-1 allongeante** |
| **Composé D-2** | Huile PDMS $\alpha,\omega$ hydrogénée comprenant également des motifs méthylhydrogenosiloxane avec un taux de SiH = 0,25% en poids | **Huile H-2 réticulante** |
| | Huile PDMS $\alpha,\omega$ hydrogénée comprenant également des motifs méthylhydrogenosiloxane avec un taux de SiH = 0,17% en poids | **Huile H-3 réticulante** |
| **Composé E** | Silice de surface spécifique de 200m$^2$/g traitée par de l'hexaméthyldisilazane | **Silice traitée** |
| **Composé F** | Catalyseur de type complexe de Kartstedt (10% poids d'élément platine). | **Catalyseur** |
| **Composé G** | Ethynylcyclohexanol | **ECH- Inhibiteur** |

Les différentes compositions bi-composantes (parties A et B) testées sont détaillées dans le tableau 2 ci-dessous. Pour chacun des essais nous avons mélangé 100 parties en poids de la Partie A avec 10 parties en poids de la partie B.

Tableau 2

| Composition Partie A (en % poids) | | | | | | |
|---|---|---|---|---|---|---|
| | **Exemple 1 Invention** | **Exemple 2 Invention** | **Comparatif 1** | **Comparatif 2** | **Comparatif 3** | **Comparatif 4** |
| **Huile VI-1** | 51 | 54,3 | 50,7 | 67 | 48,2 | 69,6 |
| **Huile VI-3** | 14,8 | 13,3 | 14,8 | 14,8 | 14,8 | |
| **Huile VI-2** | | | | | 17,8 | 16,25 |
| **Huile MonoVi** | 15 | 15 | 15 | | | |
| **Huile H-1 allongeante** | 1.8 | 1,8 | 1,8 | 1 | 1,8 | 1,6 |
| **Huile H-2 réticulante** | 0,4 | 0,3 | 0,7 | 0,22 | 0,4 | |
| **Huile H-3 réticulante** | | | | | | 1,05 |
| **ECH-Inhibiteur** | 0,015 | 0.015 | 0.015 | 0,015 | 0,015 | 0,015 |
| **Silice traitée** | 16,5 | 14,9 | 16,5 | 16,5 | 16,5 | 8,25 |

(suite)

| Composition Partie A (en % poids) | | | | | |
|---|---|---|---|---|---|
| | | | | | |
| Composition Partie B (en % poids) | | | | | |
| Huile Vi-1 | 99,87 | 99,87 | 99,87 | 99,87 | 99,87 | 99,87 |
| Catalyseur | 0,13 | 0,13 | 0,13 | 0,13 | 0,13 | 0,13 |
| | | | | | |
| Ratio molaire SiH/SiVi | 1,15 | 1,16 | 1,37 | 0,84 | 0,9 | 1.04 |
| r2-Ratio molaire $SiH_{réticulant}$/SiVi | 0,3 | 0,2 | 0,45 | 0,22 | 0,22 | 0,38 |

Toutes les compositions silicones testées sont non toxiques et ne dégagent pas d'odeur.

Pour chacune des compositions testées deux types d'essais sont réalisés.

1. **Procédé selon l'invention :** Après mélange des parties A et B, la composition est enduite de manière continue avec une épaisseur de 0,3 mm sur une dentelle standard tricotée à base de polyamide, polyester et élasthanne. La dentelle enduite est ensuite passée dans une étuve à une température de 90°C pendant 5 minutes pour effectuer la réticulation des compositions silicones. On n'observe pas de transfert de la composition silicone de l'autre côté de la dentelle.

Deux tests sont utilisés pour évaluer les performances des textiles après enduction et réticulation avec les compositions décrites précédemment.

Test de relargane d'huile : la dentelle, après enduction et réticulation de la composition silicone, est placée face enduite au contact d'un papier kraft pendant quatre jours. On effectue ensuite un contrôle visuel sur le papier kraft pour évaluer le relargage d'huile.

- Papier kraft propre : pas de relargage d'huile (0).
- Papier kraft gras : relargage d'huile classé en fonction du dépôt observé sur le papier kraft de très léger (1) à très important (4).

Un niveau de relargage d'huile au-delà de 2 est considéré comme rédhibitoire.

Test de confort pour l'utilisateur : nous avons évalué pour chacune des dentelles enduites le ressenti de l'utilisateur : sensation collante désagréable ou sensation de compression gênante ainsi que vérifié si la fonction anti-glisse était bien assurée.

2. **Propriétés de l'élastomère silicone obtenu après réticulation des différentes compositions testées.**

Mesure du module élastique selon la norme ISO R37 ou AFNOR T46002 Après mélange des parties A et B, la composition obtenue est réticulée sous presse pendant 30 minutes à 120°C. On découpe dans les plaques d'élastomère obtenues des éprouvettes en forme d'haltères. L'essai consiste à étirer jusqu'à la rupture des éprouvettes en forme d'haltère, de dimensions données, avec une machine d'essai de traction capable d'assurer une vitesse de déplacement constante de la mâchoire, et avec un extensomètre. On mesure le module atteint à 100% d'allongement exprimée en MPa qui est le rapport entre la contrainte exercée et l'allongement obtenu. Plus cette valeur est élevée, plus le module élastique de la matière textile enduite par cet élastomère sera élevé et plus la compression ressentie par l'utilisateur sera forte.

Test de friction pour l'évaluation de l'adhérence ou tack :

Après mélange des parties A et B, la composition est enduite avec une épaisseur de 0,1 mm sur un bristol de dimension 10 cm * 5cm puis réticulée pendant 5 minutes à 90°C.

Le bristol ainsi enduit est rattaché à un fil afin d'être tracté. Afin de pouvoir exercer la force sur toute la largeur de l'échantillon, celui-ci est coincé dans un mord muni d'aiguilles, lui-même rattaché au fil de traction. L'échantillon est placé face enduite contre un support en résine époxy et un poids de 200 g est appliqué dessus pendant 1 à 2 minutes, juste avant l'essai afin que la surface collante soit en contact uniforme sur le support. La mesure enregistrée est la force maximale nécessaire à décoller complètement l'échantillon du support, exprimée en Newton. Plus cette force maximale est élevée plus l'échantillon textile va adhérer à la peau de l'utilisateur.

Le tableau 3 suivant présente l'ensemble des résultats obtenus.

Tableau 3

| | Exemple 1 Invention | Exemple 2 Invention | Comparatif 1 | Comparatif. 2 | Comparatif 3 | Comparatif 4 |
|---|---|---|---|---|---|---|
| **Caractéristiques composition** | | | | | | |
| Huile MonoVi (% pds) | **15** | **15** | **15** | 0 | 0 | 0 |
| r- Ratio molaire SiH/SiVi | **1,15** | **1,16** | **1,37** | 0,84 | 0,9 | **1,04** |
| r2-Ratio molaire SiH$_{réticulant}$/SiVi | **0,3** | **0,2** | 0.45 | **0,22** | **0,22** | **0,38** |
| **Propriétés dentelles enduites** | | | | | | |
| Présence de dépôt gras | **1** | **2** | **1** | 4 | 5 | **0** |
| Sensation collante désagréable | **non** | **non** | **non** | oui | oui | **non** |
| Sensation gênante de compression | **non** | **non** | non oui | **non** | **non** | oui |
| Fonction anti-glisse assurée | oui | oui | oui | oui | oui | oui |
| **Propriétés élastomère** | | | | | | |
| Tack - Force de décollement (N) | **44** | **52** | 33 | 94 | 101 | 30 |
| Module élastique allongement à 100% (MPa) | **0,1** | **<0,1** | 0,2 | non déterminé | non déterminé | 0,25 |

Le tableau 3 ci-dessus montre que seules les compositions selon l'invention (exemples 1 et 2), c'est-à-dire les compositions contenant un polyorganosiloxane monovinylé et où le ratio molaire r$_2$ SiH$_{réticulant}$/SiVi est compris entre 0,10 et 0,40, permettent d'obtenir le bon compromis de performances c'est-à-dire une fonction antiglisse assurée sans sensation collante désagréable ni compression gênante pour l'utilisateur et avec un faible taux de relargage d'espèces huileuses qui se traduit par un faible dépôt gras observé.

Les deux conditions

1) présence d'un polyorganosiloxane avec un seul motif alcényle par molécule (polyorganosiloxane monoalcénylé),
2) le rapport molaire r$_2$ des atomes d'hydrogène liés au silicium des hydrogénopolyorganosiloxanes réticulants **(D-2)** aux radicaux alcényles liés au silicium des polyorganosiloxanes **(B)** et **(C)** compris entre 0,10 et 0,40 ,

sont néccessaires pour obtenir un textile enduit avec un bon niveau d'adhérence sur la peau sans sensation de compression gênante pour l'utilisateur. Ceci est illustré par les les exemples comparatifs 1 (présence d'huile monovinylé mais SiH$_{réticulant}$/SiVi=0,45) et 4 (SiH$_{réticulant}$/SiVi=0,38 mais absence d'huile monovinylée).

La sensation collante peut être reliée aux résultats obtenus au test de friction pour évaluer l'adhérence et la sensation de compression peut être reliée au module élastique de l'élastomère utilisé. En effet, lorsque la force de décollement nécessaire est inférieure à 35 N (essais comparatifs 1 et 4), l'utilisateur n'a pas de sensation collante mais le module élastique de l'élastomère enduit est élevé et l'utilisateur ressent une sensation de compression gênante. En revanche, lorsque la force de décollement nécessaire mesurée est supérieure à 55 N (essais comparatifs 2 et 3), l'utilisateur ressent une sensation collante désagréable qui est rédhibitoire pour l'application.

Les exemples comparatifs 2 et 3 montrent que lorsque la composition silicone ne contient pas un polyorganosiloxane monovinylé et que le ratio molaire SiH/SiVi est inférieur à 1, le niveau d'adhérence ou tack est trop élevé (94 et 101 N) et le relargage de substance huileuse évalué via le dépôt gras sur papier kraft est rédhibitoire (4 et 5).

## Revendications

1. Procédé d'enduction d'une composition silicone **(A)** précurseur d'un élastomère et réticulable par polyaddition sur un support textile comprenant les étapes a), b) et c) suivantes :

   a) On prépare une composition silicone **(A)** précurseur d'un élastomère et réticulable par polyaddition comprenant:

      - au moins un polyorganosiloxane **(B)** linéaire ou ramifié, porteur de groupements alcényles et comprenant:

         1) des motifs siloxyles terminaux de type M = $(X)_s(R)_tSiO_{1/2}$ dans lesquels les radicaux R, identiques ou différents, correspondent à un groupement alkyle linéaire ou ramifié en $C_1$-$C_6$, éventuellement substitué ou un groupement aryle substitué ou non, et les radicaux X correspondent à des groupements alcényles ayant de 2 à 6 atomes de carbone, de préférence des groupements vinyles, avec s = 0 ou 1, t= 2 ou 3 et s+ t = 3 ; et
         2) des motifs siloxyles, identiques ou différents, de type D= $(X)_u(R^1)SiO_{2/2}$ dans lesquels les radicaux $R^1$ répondent à la même définition que R, les radicaux X correspondent à des groupements alcényles ayant de 2 à 6 atomes de carbone, de préférence des groupements vinyles, avec u= 0 ou 1, v =1 ou 2 et u+ v = 2,
         avec la condition selon laquelle le polyorganosiloxane **(B)** comprend au moins deux radicaux X par molécule;

      - au moins un polyorganosiloxane **(C)** linéaire ou ramifié porteur d'un groupement alcényle par molécule et comprenant:

         1) des motifs siloxyles terminaux, identiques ou différents, de type M=$(X)_w(R^2)_xSiO_{1/2}$ dans lequel les radicaux X correspondent à des groupements alcényles ayant de 2 à 6 atomes de carbone, de préférence des groupements vinyles, et les radicaux $R^2$ répondent à la même définition que R, avec w=0 ou 1, x=2 ou 3 et w+ x =3 ; et
         2) des motifs siloxyles D = $(X)_y(R^3)SiO_{2/2}$ dans lequel les radicaux X correspondent à des groupements alcényles ayant de 2 à 6 atomes de carbone, de préférence des groupements vinyles, et les radicaux $R^3$ répondent à la même définition que R, avec y=0 ou 1, z=1 ou 2 et y+ z=2 ,
         avec la condition selon laquelle le polyorganosiloxane **(C)** comprend un seul radical X par molécule;

      - au moins deux hydrogénopolyorganosiloxanes **(D),** l'un ayant un rôle d'allongeur **(D-1)** et l'autre ayant un rôle de réticulant **(D-2):**

         - ledit hydrogénopolyorganosiloxane allongeur **(D-1)** comprenant:

            1) des motifs siloxyles terminaux de type M = $(R^4)_2(H)SiO_{1/2}$ dans lesquels les radicaux $R^4$ répondent à la même définition que R, et
            2) des motifs siloxyles, identiques ou différents, de type D = $(R^5)_2SiO_{2/2}$ dans lesquels les radicaux $R^5$ répondent à la même définition que R;
            avec la condition selon laquelle l'hydrogénopolyorganosiloxane allongeur **(D-1)** comprend deux fonctions SiH par molécule ;

         - ledit hydrogénopolyorganosiloxane réticulant **(D-2)** comprenant:

            1) des motifs siloxyles terminaux de type M = $(R^6)_2(H)SiO_{1/2}$ dans lesquels les radicaux $R^6$ répondent à la même définition que R, et
            2) des motifs siloxyles, identiques ou différents, de type D=$(R^7)_p(H)_qSiO_{2/2}$ dans lesquels les radicaux $R^7$ répondent à la même définition que R, avec p=1 ou 2, q=0 ou 1 et p + q=2;

avec la condition selon laquelle l'hydrogénopolyorganosiloxane réticulant **(D-2)** comprend au moins trois fonctions SiH par molécule;

- au moins une charge minérale **(E)**,
- une quantité efficace d'au moins un catalyseur d'hydrosilylation **(F)**,
- au moins un inhibiteur de réticulation **(G)**,
- éventuellement au moins un polyorganosiloxane non réactif **(H)** comprenant :

    1) des motifs siloxyles terminaux de type M = $(R^3)_3SiO_{1/2}$ dans lesquels les radicaux $R^8$ répondent à la même définition que R, et
    2) des motifs siloxyles, identiques ou différents, de type D = $(R^9)_2SiO_{2/2}$ dans lesquels les radicaux $R^9$ répondent à la même définition que R, et

- éventuellement un additif de formulation **(I)**,

avec la condition supplémentaire que la quantité des polyorganosiloxanes **(B)**, **(C)** et **(D)** est choisie de manière à ce que le rapport molaire r2 des atomes d'hydrogène liés au silicium des hydrogénopolyorganosiloxanes réticulants **(D-2)** aux radicaux alcényles liés au silicium des polyorganosiloxanes **(B)** et **(C)** est définit comme suit :

$$0,10 \leq r_2 \leq 0,40 \ ,$$

préférentiellement $0,15 \leq r_2 \leq 0,35$, et
encore plus préférentiellement $0,20 \leq r_2 \leq 0,30$; .

b) puis on dépose de manière continue ou discontinue ladite composition silicone **(A)** sur ledit support textile, et
c) on procède à la réticulation de ladite composition silicone **(A)** par chauffage et/ou par rayonnement infra-rouge.

2. Procédé selon la revendication 1 **caractérisé en ce que** les polyorganosiloxanes **(B)**, **(C)** et **(D)** sont ajoutés dans la composition silicone **(A)** de manière à ce que le rapport molaire r des atomes d'hydrogène liés au silicium des hydrogénopolyorganosiloxanes **(D-1)** et **(D-2)** aux radicaux alcényles liés au silicium des polyorganosiloxanes **(B)** et **(C)** soit supérieur à 1 et de préférence compris entre 1 et 1,35, et encore plus préférentiellement compris entre 1 et 1,25.

3. Procédé selon l'une quelconque des revendications 1 à 2 **caractérisé en ce que** la composition silicone **(A)** présente une viscosité dynamique supérieure à 100000 mPa.s.

4. Procédé selon l'une quelconque des revendications 1 à 3 **caractérisé en ce que** la composition silicone **(A)** est obtenue par mélange d'au moins deux parties P1 et P2 comprenant les constituants **(B)** à **(G)** et éventuellement **(H)** et **(1)**, avec comme condition que le catalyseur de la réaction d'hydrosilylation **(F)** soit séparé du constituant **(D)**.

5. Procédé selon l'une quelconque des revendications 1 à 4 **caractérisé en ce que** la composition silicone **(A)** comprend les constituants **(B)** à **(I)** dans les proportions suivantes, en pourcentage en poids par rapport à la masse totale de la composition silicone **(A)** :

**(B)** de 40 à 90
**(C)** de 4 à 20
**(D-1)** de 1 à 2
**(D-2)** de 0,1 à 0,6
**(E)** de 5 à 20
**(F)** de 0,005 à 0,25
**(G)** de 0,010 à 0,020
**(H)** de 0 à 10
**(I)** de 0 à 5

6. Procédé selon l'une quelconque des revendications 1 à 7 **caractérisé en ce que** à l'étape b) on dépose ladite composition silicone **(A)** sur le support textile par transfert, par rouleau lécheur ou par pulvérisation à l'aide d'une buse, d'une racle, d'un cadre rotatif ou d'un rouleau inverse **« reverse roll »**.

7. Procédé selon la revendication 1 **caractérisé en ce que** le support textile est une dentelle ou une bande élastique.

8. Composition silicone **(A)** précurseur d'un élastomère et réticulable par polyaddition comprenant:

    - au moins un polyorganosiloxane **(B)** linéaire ou ramifié, porteur de groupements alcényles et comprenant:

        1) des motifs siloxyles terminaux de type M = $(X)_s(R)_tSiO_{1/2}$ dans lesquels les radicaux R, identiques ou différents, correspondent à un groupement alkyle linéaire ou ramifié en $C_1$-$C_6$, éventuellement substitué ou un groupement aryle substitué ou non, et les radicaux X correspondent à des groupements alcényles ayant de 2 à 6 atomes de carbone, de préférence des groupements vinyls, avec s = 0 ou 1, t= 2 ou 3 et s+ t = 3 ; et

        2) des motifs siloxyles, identiques ou différents, de type D= $(X)_u(R^1)_ySiO_{2/2}$ dans lesquels les radicaux $R^1$ répondent à la même définition que R, les radicaux X correspondent à des groupements alcényles ayant de 2 à 6 atomes de carbone, de préférence des groupements vinyls, avec u= 0 ou 1, v =1 ou 2 et u+ v = 2, avec la condition selon laquelle le polyorganosiloxane **(B)** comprend au moins deux radicaux X par molécule;

    - au moins un polyorganosiloxane **(C)** linéaire ou ramifié porteur d'un groupement alcényle par molécule et comprenant:

        1) des motifs siloxyles terminaux, identiques ou différents, de type $M=(X)_w(R^2)_xSiO_{1/2}$ dans lequel les radicaux X correspondent à des groupements alcényles ayant de 2 à 6 atomes de carbone, de préférence des groupements vinyls, et les radicaux $R^2$ répondent à la même définition que R, avec w=0 ou 1, x=2 ou 3 et w+ x =3 ; et

        2) des motifs siloxyles D = $(X)_y(R^3)_zSiO_{2/2}$ dans lequel les radicaux X correspondent à des groupements alcényles ayant de 2 à 6 atomes de carbone, de préférence des groupements vinyls, et les radicaux $R^3$ répondent à la même définition que R, avec y=0 ou 1, z=1 ou 2 et y+ z=2 ,

        avec la condition selon laquelle le polyorganosiloxane **(C)** comprend un seul radical X par molécule;

    - au moins deux hydrogénopolyorganosiloxanes **(D)**, l'un ayant un rôle d'allongeur **(D-1)** et l'autre ayant un rôle de réticulant **(D-2)**:

        - ledit hydrogénopolyorganosiloxane allongeur **(D-1)** comprenant:

            1) des motifs siloxyles terminaux de type M = $(R^4)_2(H)SiO_{1/2}$ dans lesquels les radicaux $R^4$ répondent à la même définition que R, et

            2) des motifs siloxyles, identiques ou différents, de type D = $(R^5)_2SiO_{2/2}$ dans lesquels les radicaux $R^5$ répondent à la même définition que R;

            avec la condition selon laquelle l'hydrogénopolyorganosiloxane allongeur **(D-1)** comprend deux fonctions SiH par molécule ;

        - ledit hydrogénopolyorganosiloxane réticulant **(D-2)** comprenant:

            1) des motifs siloxyles terminaux de type M = $(R^6)_2(H)SiO_{1/2}$ dans lesquels les radicaux $R^6$ répondent à la même définition que R, et

            2) des motifs siloxyles, identiques ou différents, de type $D=(R^7)_p(H)_qSiO_{2/2}$ dans lesquels les radicaux $R^7$ répondent à la même définition que R, avec p=1 ou 2, q=0 ou 1 et p + q=2 ;

            avec la condition selon laquelle l'hydrogénopolyorganosiloxane réticulant **(D-2)** comprend au moins trois fonctions SiH par molécule;

    - au moins une charge minérale **(E)**,
    - une quantité efficace d'au moins un catalyseur d'hydrosilylation **(F)**,
    - au moins un inhibiteur de réticulation **(G)**,
    - éventuellement au moins un polyorganosiloxane non réactif **(H)** comprenant :

        1) des motifs siloxyles terminaux de type M = $(R^8)_3SiO_{1/2}$ dans lesquels les radicaux $R^3$ répondent à la même définition que R, et

2) des motifs siloxyles, identiques ou différents, de type D = $(R^9)_2SiO_{2/2}$ dans lesquels les radicaux $R^9$ répondent à la même définition que R, et

- éventuellement un additif de formulation **(I)**,

avec la condition supplémentaire que la quantité des polyorganosiloxanes **(B), (C)** et **(D)** est choisie de manière à ce que le rapport molaire $r_2$ des atomes d'hydrogène liés au silicium des hydrogénopolyorganosiloxanes réticulant **(D-2)** aux radicaux alcényles liés au silicium des polyorganosiloxanes **(B)** et **(C)** est définit comme suit :

$$0{,}10 \leq r_2 \leq 0{,}40 \, ,$$

préférentiellement $0{,}15 \leq r_2 \leq 0{,}35$, et
encore plus préférentiellement $0{,}20 \leq r_2 \leq 0{,}30$.

9. Composition silicone **(A)** selon la revendication 8 **caractérisée en ce que** les polyorganosiloxanes **(B), (C)** et **(D)** sont ajoutés dans la composition silicone **(A)** de manière à ce que le rapport molaire r des atomes d'hydrogène liés au silicium des hydrogénopolyorganosiloxanes **(D-1)** et **(D-2)** aux radicaux alcényles liés au silicium des polyorganosiloxanes **(B)** et **(C)** soit supérieur à 1 et de préférence compris entre 1 et 1,30, et encore plus préférentiellement compris entre 1 et 1,25.

10. Textile enduit susceptible d'être obtenu par le procédé selon l'une quelconque des revendications 1 à 7.

11. Utilisation de la composition silicone **(A)** telle que définie selon l'une quelconque des revendications 8 et 9 pour enduire un support textile et plus particulièrement une dentelle ou une bande élastique.

**Claims**

1. Process for coating a silicone composition **(A),** which is a precursor of an elastomer and is polyaddition-crosslinkable, onto a textile medium, said process comprising the following steps a), b) and c):

    a) A silicone composition **(A)** which is a precursor of an elastomer and is polyaddition-crosslinkable, comprising:

    - at least one linear or branched polyorganosiloxane **(B)** carrying alkenyl groups and comprising:

        1) terminal siloxyl units of type M = $(X)_s(R)_tSiO_{1/2}$ in which the radicals R, which are identical or different, correspond to a $C_1$-$C_6$ linear or branched alkyl group, optionally substituted, or a substituted or unsubstituted aryl group, and the radicals X correspond to alkenyl groups having 2 to 6 carbon atoms, preferably vinyl groups, with s = 0 or 1, t = 2 or 3 and s + t = 3; and
        2) siloxyl units, which are identical or different, of type D = $(X)_u(R^1)_vSiO_{2/2}$ in which the radicals $R^1$ meet the same definition as for R, the radicals X correspond to alkenyl groups having 2 to 6 carbon atoms, preferably vinyl groups, with u = 0 or 1, v = 1 or 2 and u + v = 2,
        with the condition whereby the polyorganosiloxane **(B)** comprises at least two radicals X per molecule;

    - at least one linear or branched polyorganosiloxane **(C)** carrying one alkenyl group per molecule and comprising:

        1) terminal siloxyl units, which are identical or different, of type M = $(X)_w(R^2)_xSiO_{1/2}$ in which the radicals X correspond to alkenyl groups having 2 to 6 carbon atoms, preferably vinyl groups, and the radicals $R^2$ meet the same definition as for R, with w = 0 or 1, x = 2 or 3 and w + x = 3; and
        2) siloxyl units D = $(X)_y(R^3)_z SiO_{2/2}$ in which the radicals X correspond to alkenyl groups having 2 to 6 carbon atoms, preferably vinyl groups, and the radicals $R^3$ meet the same definition as for R, with y = 0 or 1, z = 1 or 2 and y + z = 2,
        with the condition whereby the polyorganosiloxane **(C)** comprises just one radical X per molecule;

    - at least two hydrogenopolyorganosiloxanes **(D)**, one **(D-1)** having a chain extender role and the other **(D-2)** having a crosslinking role:

- said chain extender hydrogenopolyorganosiloxane **(D-1)** comprising.

1) terminal siloxyl units of type M = $(R^4)_2$ $(H)SiO_{1/2}$ in which the radicals $R^4$ meet the same definition as for R and
2) siloxyl units, which are identical or different, of type D = $(R^5)_2SiO_{2/2}$ in which the radicals $R^5$ meet the same definition as for R, with the condition whereby the chain extender hydrogenopolyorganosiloxane **(D-1)** comprises two SiH functional groups per molecule;

- said crosslinking hydrogenopolyorganosiloxane **(D-2)** comprising:

1) terminal siloxyl units of type M = $(R^6)_2(H)SiO_{1/2}$ in which the radicals $R^6$ meet the same definition as for R and
2) siloxyl units, which are identical or different, of type D $(R^7)_p(H)_qSiO_{2/2}$ in which the radicals $R^7$ meet the same definition as for R, with p = 1 or 2, q = 0 or 1 and p + q = 2,
with the condition whereby the crosslinking hydrogenopolyorganosiloxane **(D-2)** comprises at least three SiH functional groups per molecule;

- at least one mineral filler **(E)**;
- an effective amount of at least one hydrosilylation catalyst **(F)**;
- at least one crosslinking inhibitor **(G)**;
- optionally at least one unreactive polyorganosiloxane **(H)** comprising:

1) terminal siloxyl units of type M = $(R^8)_3SiO_{1/2}$ in which the radicals $R^8$ meet the same definition as for R and
2) siloxyl units, which are identical or different, of type D = $(R^9)_2SiO_{2/2}$ in which the radicals $R^9$ meet the same definition as for R, and

- optionally a formulation additive **(I)**,

with the additional condition that the amounts of the polyorganosiloxanes **(B)**, **(C)** and **(D)** are chosen so that the molar ratio r2 of the hydrogen atoms linked to the silicone of the crosslinking hydrogenopolyorganosiloxanes **(D-2)** for the alkenyl radicals linked to the silicon of the polyorganosiloxanes **(B)** and **(C)** is defined as follows:

$$0.10 \leq r_2 \leq 0.40,$$

preferably $0.15 \leq r_2 \leq 0.35$ and
even more preferably $0.20 \leq r_2 \leq 0.30$ is prepared;
b) next, said silicone composition **(A)** is deposited continuously or discontinuously on said textile medium; and
c) crosslinking of said silicone composition **(A)** is effected by heating and/or by infrared radiation.

2. Process according to Claim 1, **characterized in that** the polyorganosiloxanes **(B), (C)** and **(D)** are added to the silicone composition **(A)** so that the molar ratio r of the hydrogen atoms linked to the silicon of the hydrogenopolyorganosiloxanes **(D-1)** and **(D-2)** to the alkenyl radicals linked to the silicon of the polyorganosiloxanes **(B)** and **(C)** is greater than 1 and preferably between 1 and 1.35 and even more preferably between 1 and 1.25.

3. Process according to either of Claims 1 and 2, **characterized in that** the silicone composition **(A)** has a dynamic viscosity of greater than 100 000 mPa.s.

4. Process according to any one of Claims 1 to 3, **characterized in that** the silicone composition **(A)** is obtained by mixing at least two parts P1 and P2 comprising the constituents **(B)** to **(G)** and optionally **(H)** and **(I)** , with the condition that the catalyst **(F)** for the hydrosilylation reaction is separate from the constituent **(D).**

5. Process according to any one of Claims 1 to 4, **characterized in that** the silicone composition **(A)** comprises the constituents **(B)** to **(I)** in the following proportions, expressed as percentage by weight relative to the total weight of the silicone composition **(A):**

| | |
|---|---|
| **(B)** | from 40 to 90 |
| **(C)** | from 4 to 20 |
| **(D-1)** | from 1 to 2 |
| **(D-2)** | from 0.1 to 0.6 |
| **(E)** | from 5 to 20 |
| **(F)** | from 0.005 to 0.25 |
| **(G)** | from 0.010 to 0.020 |
| **(H)** | from 0 to 10 |
| **(I)** | from 0 to 5. |

6. Process according to any one of Claims 1 to 5, **characterized in that** in step b) said silicone composition **(A)** is deposited on the textile medium by a transfer roll coater, by a lick roll coater or by spraying using a nozzle, a doctor blade, a rotary frame or by a reverse roll coater.

7. Process according to Claim 1, **characterized in that** the textile medium is a lace or an elastic strip.

8. Silicone composition **(A)** which is a precursor of an elastomer and is polyaddition-crosslinkable, comprising:

- at least one linear or branched polyorganosiloxane **(B)** carrying alkenyl groups and comprising:

1) terminal siloxyl units of type M = $(X)_s(R)_t SiO_{1/2}$ in which the radicals R, which are identical or different, correspond to a $C_1$-$C_6$ linear or branched alkyl group, optionally substituted, or a substituted or unsubstituted aryl group, and the radicals X correspond to alkenyl groups having 2 to 6 carbon atoms, preferably vinyl groups, with s = 0 or 1, t = 2 or 3 and s + t = 3; and
2) siloxyl units, which are identical or different, of type D = $(X)_u(R^1)_v SiO_{2/2}$ in which the radicals $R^1$ meet the same definition as for R, the radicals X correspond to alkenyl groups having 2 to 6 carbon atoms, preferably vinyl groups, with u = 0 or 1, v = 1 or 2 and u + v = 2,
with the condition whereby the polyorganosiloxane **(B)** comprises at least two radicals X per molecule;

- at least one linear or branched polyorganosiloxane **(C)** carrying one alkenyl group per molecule and comprising:

1) terminal siloxyl units, which are identical or different, of type M = $(X)_w(R^2)_x SiO_{1/2}$ in which the radicals X correspond to alkenyl groups having 2 to 6 carbon atoms, preferably vinyl groups, and the radicals $R^2$ meet the same definition as for R, with w = 0 or 1, x = 2 or 3 and w + x = 3; and
2) siloxyl units D = $(X)_y (R^3)_2 SiO_{2/2}$ in which the radicals X correspond to alkenyl groups having 2 to 6 carbon atoms, preferably vinyl groups, and the radicals $R^3$ meet the same definition as for R, with y = 0 or 1, z = 1 or 2 and y + z = 2,
with the condition whereby the polyorganosiloxane **(C)** comprises just one radical X per molecule;

- at least two hydrogenopolyorganosiloxanes **(D),** one **(D-1)** having a chain extender role and the other **(D-2)** having a crosslinking role:
- said chain extender hydrogenopolyorganosiloxane **(D-1)** comprising:

1) terminal siloxyl units of type M = $(R^4)_2(H) SiO_{1/2}$ in which the radicals $R^4$ meet the same definition as for R and
2) siloxyl units, which are identical or different, of type D = $(R^5)_2 SiO_{2/2}$ in which the radicals $R^5$ meet the same definition as for R, with the condition whereby the chain extender hydrogenopolyorganosiloxane **(D-1)** comprises two SiH functional groups per molecule;

- said crosslinking hydrogenopolyorganosiloxane **(D-2)** comprising:

1) terminal siloxyl units of type M = $(R^6)_2(H)SiO_{1/2}$ in which the radicals $R^6$ meet the same definition as for R and
2) siloxyl units, which are identical or different, of type D = $(R^7)_p(H)_q SiO_{2/2}$ in which the radicals $R^7$ meet

the same definition as for R, with p = 1 or 2, q = 0 or 1 and p + q = 2,
with the condition whereby the crosslinking hydrogenopolyorganosiloxane **(D-2)** comprises at least three SiH functional groups per molecule;

- at least one mineral filler **(E);**
- an effective amount of at least one hydrosilylation catalyst **(F);**
- at least one crosslinking inhibitor **(G);**
- optionally at least one unreactive polyorganosiloxane **(H)** comprising:

1) terminal siloxyl units of type M = $(R^8)_3SiO_{1/2}$ in which the radicals $R^8$ meet the same definition as for R and
2) siloxyl units, which are identical or different, of type D = $(R^9)_2SiO_{2/2}$ in which the radicals $R^9$ meet the same definition as for R, and

- optionally a formulation additive **(1),**
with the additional condition that the amounts of the polyorganosiloxanes **(B), (C)** and **(D)** are chosen so that the molar ratio $r_2$ of the hydrogen atoms linked to the silicon of the crosslinking hydrogenopolyorganosiloxanes **(D-2)** to the alkenyl radicals linked to the silicon of the polyorganosiloxanes **(B)** and **(C)** is defined as follows:

$$0.10 \leq r_2 \leq 0.40,$$

preferably $0.15 \leq r_2$ 0.35 and
even more preferably $0.20 \leq r_2 \leq 0.30$.

9. Silicone composition **(A)** according to Claim 8, **characterized in that** the polyorganosiloxanes **(B), (C)** and **(D)** are added to the silicone composition **(A)** so that the molar ratio r of the hydrogen atoms linked to the silicon of the hydrogenopolyorganosiloxanes **(D-1)** and **(D-2)** to the alkenyl radicals linked to the silicon of the polyorganosiloxanes **(B)** and **(C)** is greater than 1 and preferably between 1 and 1.30 and even more preferably between 1 and 1.25.

10. Coated textile that can be obtained by the process according to any one of Claims 1 to 7.

11. Use of the silicone composition **(A)** as defined in either of Claims 8 and 9 for coating a textile medium and more particularly a lace or an elastic strip.

**Patentansprüche**

1. Verfahren zum Auftragen einer Silikonzusammensetzung **(A),** die eine Vorstufe eines Elastomers darstellt und durch Polyaddition vernetzbar ist, auf einen textilen Träger, das die folgenden Schritte a), b) und c) umfasst:

a) man stellt eine Silikonzusammensetzung **(A)** her, die eine Vorstufe eines Elastomers darstellt und durch Polyaddition vernetzbar ist, umfassend:

- mindestens ein lineares oder verzweigtes Polyorganosiloxan **(B),** das Alkenylgruppen trägt und:

1) endständige Siloxyleinheiten des Typs M = $(X)_s(R)_t SiO_{1/2}$,
worin die Reste R gleich oder verschieden sind und einer linearen oder verzweigten $C_1$-$C_6$-Alkylgruppe, die gegebenenfalls substituiert ist, oder einer substituierten oder unsubstituierten Arylgruppe entsprechen und die Reste X Alkenylgruppen mit 2 bis 6 Kohlenstoffatomen, vorzugsweise Vinylgruppen, entsprechen, wobei s = 0 oder 1, t = 2 oder 3 und s + t = 3; und
2) gleiche oder verschiedene Siloxyleinheiten des Typs D = $(X)_u(R^1)SiO_{2/2}$, worin die Reste $R^1$ der gleichen Definition wie R entsprechen, wobei die Reste X Alkenylgruppen mit 2 bis 6 Kohlenstoffatomen, vorzugsweise Vinylgruppen, entsprechen, wobei u = 0 oder 1, v = 1 oder 2 und u + v = 2;

umfasst, mit der Maßgabe, dass das Polyorganosiloxan **(B)** mindestens zwei Reste X pro Molekül umfasst;
- mindestens ein lineares oder verzweigtes Polyorganosiloxan **(C),** das eine Alkenylgruppe pro Molekül trägt und:

1) gleiche oder verschiedene endständige Siloxyleinheiten des Typs M = $(X)_w(R^2)_x SiO_{1/2}$, worin die Reste X Alkenylgruppen mit 2 bis 6 Kohlenstoffatomen, vorzugsweise Vinylgruppen, entsprechen und die Reste $R^2$ der gleichen Definition wie R entsprechen, wobei w = 0 oder 1, x = 2 oder 3 und w + x = 3; und
2) Siloxyleinheiten des Typs D = $(X)_y(R^3)_z SiO_{2/2}$, worin die Reste X Alkenylgruppen mit 2 bis 6 Kohlenstoffatomen, vorzugsweise Vinylgruppen, entsprechen und die Reste $R^3$ der gleichen Definition wie R entsprechen, wobei y = 0 oder 1, z = 1 oder 2 und y + z = 2;

umfasst, mit der Maßgabe, dass das Polyorganosiloxan **(C)** einen einzigen Rest X pro Molekül umfasst;
- mindestens zwei Hydrogenpolyorganosiloxane **(D)**, von denen eines die Rolle eines Verlängerungsmittels **(D-1)** spielt und das andere die Rolle eines Vernetzungsmittels **(D-2)** spielt:

- wobei das als Verlängerungsmittel dienende Hydrogenpolyorganosiloxan **(D-1)**:

1) endständige Siloxyleinheiten des Typs M = $(R^4)_2(H)SiO_{1/2}$, worin die Reste $R^4$ der gleichen Definition wie R entsprechen, und
2) gleiche oder verschiedene Siloxyleinheiten des Typs D = $(R^5)_2 SiO_{2/2}$, worin die Reste $R^5$ der gleichen Definition wie R entsprechen,

umfasst, mit der Maßgabe, dass das als Verlängerungsmittel dienende Hydrogenpolyorganosiloxan **(D-1)** zwei SiH-Funktionen pro Molekül umfasst;

- wobei das als Vernetzungsmittel dienende Hydrogenpolyorganosiloxan **(D-2)**:

1) endständige Siloxyleinheiten des Typs M = $(R^6)_2(H)SiO_{1/2}$, worin die Reste $R^6$ der gleichen Definition wie R entsprechen, und
2) gleiche oder verschiedene Siloxyleinheiten des Typs D = $(R^7)_p(H)_q SiO_{2/2}$, worin die Reste $R^7$ der gleichen Definition wie R entsprechen, wobei p = 1 oder 2, q = 0 oder 1 und p + q = 2,

umfasst, mit der Maßgabe, dass das als Vernetzungsmittel dienende Hydrogenpolyorganosiloxan **(D-2)** mindestens drei SiH-Funktionen pro Molekül umfasst;
- mindestens einen mineralischen Füllstoff **(E)**,
- eine wirksame Menge mindestens eines Hydrosilylierungskatalysators **(F)**,
- mindestens einen Vernetzungsinhibitor **(G)**,
- gegebenenfalls mindestens ein nichtreaktives Polyorganosiloxan **(H)**, umfassend:

1) endständige Siloxyleinheiten des Typs M = $(R^8)_3 SiO_{1/2}$, worin die Reste $R^8$ der gleichen Definition wie R entsprechen, und
2) gleiche oder verschiedene Siloxyleinheiten des Typs D = $(R^9)_2 SiO_{2/2}$, worin die Reste $R^9$ der gleichen Definition wie R entsprechen,

- und gegebenenfalls ein Formulierungsadditiv **(I)**,

mit der zusätzlichen Maßgabe, dass die Menge der Polyorganosiloxane **(B)**, **(C)** und **(D)** so gewählt wird, dass das Molverhältnis r2 der siliciumgebundenen Wasserstoffatome der als Vernetzungsmittel dienenden Hydrogenpolyorganosiloxane **(D-2)** zu den siliciumgebundenen Alkenylresten der Polyorganosiloxane **(B)** und **(C)** folgendermaßen definiert ist:

$$0,10 \leq r_2 \leq 0,40,$$

vorzugsweise $0,15 \leq r_2 \leq 0,35$ und
noch weiter bevorzugt $0,20 \leq r_2 \leq 0,30$;
b) dann bringt man die Silikonzusammensetzung **(A)** kontinuierlich oder diskontinuierlich auf den textilen Träger auf, und
c) man führt die Vernetzung der Silikonzusammensetzung **(A)** durch Erhitzen und/oder durch Infrarotstrahlung durch.

**2.** Verfahren nach Anspruch 1, **dadurch gekennzeichnet, dass** man die Polyorganosiloxane **(B), (C)** und **(D)** der Silikonzusammensetzung **(A)** so zugibt, dass das Molverhältnis r der siliciumgebundenen Wasserstoffatome der Hydrogenpolyorganosiloxane **(D-1)** und **(D-2)** zu den siliciumgebundenen Alkenylresten der Polyorganosiloxane **(B)** und **(C)** größer als 1 ist und vorzugsweise zwischen 1 und 1,35 und noch weiter bevorzugt zwischen 1 und 1,25 liegt.

**3.** Verfahren nach einem der Ansprüche 1 bis 2, **dadurch gekennzeichnet, dass** die Silikonzusammensetzung **(A)** eine dynamische Viskosität von mehr als 100.000 mPa.s aufweist.

**4.** Verfahren nach einem der Ansprüche 1 bis 3, **dadurch gekennzeichnet, dass** man die Silikonzusammensetzung **(A)** durch Mischen von mindestens zwei Teilen P1 und P2, die die Bestandteile **(B)** bis **(G)** und gegebenenfalls **(H)** und **(I)** umfassen, mit der Maßgabe, dass der Hydrosilylierungskatalysator **(F)** von Bestandteil **(D)** getrennt ist, erhält.

**5.** Verfahren nach einem der Ansprüche 1 bis 4, **dadurch gekennzeichnet, dass** die Silikonzusammensetzung **(A)** die Bestandteile **(B)** bis **(I)** in den folgenden Anteilen in Gewichtsprozent, bezogen auf das Gesamtgewicht der Silikonzusammensetzung **(A),** umfasst:

| | |
|---|---|
| **(B)** | von 40 bis 90 |
| **(C)** | von 4 bis 20 |
| **(D-1)** | von 1 bis 2 |
| **(D-2)** | von 0,1 bis 0,6 |
| **(E)** | von 5 bis 20 |
| **(F)** | von 0,005 bis 0,25 |
| **(G)** | von 0,010 bis 0,020 |
| **(H)** | von 0 bis 10 |
| **(I)** | von 0 bis 5. |

**6.** Verfahren nach einem der Ansprüche 1 bis 5, **dadurch gekennzeichnet, dass** man in Schritt b) die Silikonzusammensetzung **(A)** mittels Transfer, Pflatschwalze oder durch Aufsprühen mit Hilfe einer Düse, einer Rakel, einer Rotationsmaschine oder einer Umkehrwalze auf den textilen Träger aufbringt.

**7.** Verfahren nach Anspruch 1, **dadurch gekennzeichnet, dass** es sich bei dem textilen Träger um ein Spitzengewebe oder ein elastisches Band handelt.

**8.** Silikonzusammensetzung **(A),** die eine Vorstufe eines Elastomers darstellt und durch Polyaddition vernetzbar ist, umfassend:

- mindestens ein lineares oder verzweigtes Polyorganosiloxan **(B),** das Alkenylgruppen trägt und:

1) endständige Siloxyleinheiten des Typs M = $(X)_s(R)_t SiO_{1/2}$,
worin die Reste R gleich oder verschieden sind und einer linearen oder verzweigten $C_1$-$C_6$-Alkylgruppe, die gegebenenfalls substituiert ist, oder einer substituierten oder unsubstituierten Arylgruppe entsprechen und die Reste X Alkenylgruppen mit 2 bis 6 Kohlenstoffatomen, vorzugsweise Vinylgruppen, entsprechen, wobei s = 0 oder 1, t = 2 oder 3 und s + t = 3; und
2) gleiche oder verschiedene Siloxyleinheiten des Typs D = $(X)_u(R^1)_v SiO_{2/2}$, worin die Reste $R^1$ der gleichen Definition wie R entsprechen, wobei die Reste X Alkenylgruppen mit 2 bis 6 Kohlenstoffatomen, vorzugsweise Vinylgruppen, entsprechen, wobei u = 0 oder 1, v = 1 oder 2 und u + v = 2;

umfasst, mit der Maßgabe, dass das Polyorganosiloxan **(B)** mindestens zwei Reste X pro Molekül umfasst;
- mindestens ein lineares oder verzweigtes Polyorganosiloxan **(C),** das eine Alkenylgruppe pro Molekül trägt und:

1) gleiche oder verschiedene endständige Siloxyleinheiten des Typs M = $(X)_w(R^2)_x SiO_{1/2}$, worin die Reste X Alkenylgruppen mit 2 bis 6 Kohlenstoffatomen, vorzugsweise Vinylgruppe, entsprechen und die Reste $R^2$ der gleichen Definition wie R entsprechen, wobei w = 0 oder 1, x = 2 oder 3 und w + x = 3; und
2) Siloxyleinheiten des Typs D = $(X)_y(R^3)_z SiO_{2/2}$, worin die Reste X Alkenylgruppen mit 2 bis 6 Kohlenstoffatomen, vorzugsweise Vinylgruppen, entsprechen und die Reste $R^3$ der gleichen Definition wie R entsprechen, wobei y = 0 oder 1, z = 1 oder 2 und y + z = 2;

umfasst, mit der Maßgabe, dass das Polyorganosiloxan **(C)** einen einzigen Rest X pro Molekül umfasst;
- mindestens zwei Hydrogenpolyorganosiloxane **(D)**, von denen eines die Rolle eines Verlängerungsmittels **(D-1)** spielt und das andere die Rolle eines Vernetzungsmittels **(D-2)** spielt:
- wobei das als Verlängerungsmittel dienende Hydrogenpolyorganosiloxan **(D-1)**:

1) endständige Siloxyleinheiten des Typs M = $(R^4)_2(H)SiO_{1/2}$, worin die Reste $R^4$ der gleichen Definition wie R entsprechen, und
2) gleiche oder verschiedene Siloxyleinheiten des Typs D $(R^5)_2SiO_{2/2}$, worin die Reste $R^5$ der gleichen Definition wie R entsprechen,

umfasst, mit der Maßgabe, dass das als Verlängerungsmittel dienende Hydrogenpolyorganosiloxan **(D-1)** zwei SiH-Funktionen pro Molekül umfasst;
- wobei das als Vernetzungsmittel dienende Hydrogenpolyorganosiloxan **(D-2)**:

1) endständige Siloxyleinheiten des Typs M = $(R^6)_2(H)SiO_{1/2}$, worin die Reste $R^6$ der gleichen Definition wie R entsprechen, und
2) gleiche oder verschiedene Siloxyleinheiten des Typs D = $(R^7)_p(H)_qSiO_{2/2}$, worin die Reste $R^7$ der gleichen Definition wie R entsprechen, wobei p = 1 oder 2, q = 0 oder 1 und p + q = 2,

umfasst, mit der Maßgabe, dass das als Vernetzungsmittel dienende Hydrogenpolyorganosiloxan **(D-2)** mindestens drei SiH-Funktionen pro Molekül umfasst;
- mindestens einen mineralischen Füllstoff **(E)**,
- eine wirksame Menge mindestens eines Hydrosilylierungskatalysators **(F)**,
- mindestens einen Vernetzungsinhibitor **(G)**,
- gegebenenfalls mindestens ein nichtreaktives Polyorganosiloxan **(B)**, umfassend:

1) endständige Siloxyleinheiten des Typs M = $(R^8)_3SiO_{1/2}$, worin die Reste $R^8$ der gleichen Definition wie R entsprechen, und
2) gleiche oder verschiedene Siloxyleinheiten des Typs D = $(R^9)_2SiO_{2/2}$, worin die Reste $R^9$ der gleichen Definition wie R entsprechen,

- und gegebenenfalls ein Formulierungsadditiv v **(I)**,

mit der zusätzlichen Maßgabe, dass die Menge der Polyorganosiloxane **(B)**, **(C)** und **(D)** so gewählt wird, dass das Molverhältnis $r_2$ der siliciumgebundenen Wasserstoffatome der als Vernetzungsmittel dienenden Hydrogenpolyorganosiloxane **(D-2)** zu den siliciumgebundenen Alkenylreste der Polyorganosiloxane **(B)** und **(C)** folgendermaßen definiert ist:

$$0,10 \leq r_2 \leq 0,40,$$

vorzugsweise $0,15 \leq r_2 \leq 0,35$ und
noch weiter bevorzugt $0,20 \leq r_2 \leq 0,30$.

**9.** Silikonzusammensetzung **(A)** nach Anspruch 8, **dadurch gekennzeichnet, dass** die Polyorganosiloxane **(B)**, **(C)** und **(D)** der Silikonzusammensetzung **(A)** so zugesetzt sind, dass das Molverhältnis r der siliciumgebundenen Wasserstoffatome der Hydrogenpolyorganosiloxane **(D-1)** und **(D-2)** zu den siliciumgebundenen Alkenylresten der Polyorganosiloxane **(B)** und **(C)** größer als 1 ist und vorzugsweise zwischen 1 und 1,30 und noch weiter bevorzugt zwischen 1 und 1,25 liegt.

**10.** Beschichtete Textilie, die durch das Verfahren nach einem der Ansprüche 1 bis 7 erhältlich ist.

**11.** Verwendung der Silikonzusammensetzung **(A)** gemäß einem der Ansprüche 8 und 9 zum Beschichten eines textilen Trägers und insbesondere eines Spitzengewebes oder eines elastischen Bands.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2887124
- FR 2899248
- US 2823218 A
- US 3419593 A
- US 3159601 A
- US 3159662 A
- US 3220972 A
- FR 1528464
- FR 2372874

**Littérature non-brevet citée dans la description**

- **WALTER NOLL.** Chemistry and Technology of Silicones. Academic Press, 1968, 386-409